(19) Europäisches Patentamt
European Patent Office
Office européen des brevets

(11) EP 2 860 888 A1

(12) EUROPEAN PATENT APPLICATION

(43) Date of publication:
15.04.2015 Bulletin 2015/16

(51) Int Cl.:
*H04B 10/69* (2013.01)

(21) Application number: 13306406.3

(22) Date of filing: 14.10.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALCATEL LUCENT
92100 Boulogne-Billancourt (FR)

(72) Inventor: Bülow, Henning
70435 Stuttgart (DE)

(74) Representative: 2SPL Patentanwälte PartG mbB
Postfach 15 17 23
80050 München (DE)

(54) **Apparatus, Method and Computer Program for an Optical Receiver**

(57)     Embodiments relate to an apparatus, a method and a computer program for an optical receiver. The apparatus (10) for a receiver (100) comprises a receiver module (12), which is operable to receive an optical signal and to provide an electrical time domain signal based on the optical signal. The apparatus (10) further comprises a processing module (14), which is operable to non-linearly transform the electrical time domain signal into an electrical frequency domain signal. The processing module (14) is further operable to detect received data based on the electrical frequency domain signal and based on a set of two or more transmit symbols from a known symbol alphabet transmitted by the transmitter (200).

Fig. 1

Printed by Jouve, 75001 PARIS (FR)

**Description**

Technical Field

Embodiments relate to an apparatus, a method and a computer program for an optical receiver, more particularly but not exclusively, to an efficient optical receiver concept.

Background

This section introduces aspects that may be helpful in facilitating a better understanding of the invention(s). Accordingly, the statements of this section are to be read in this light and are not to be understood as admissions about what is in the prior art or what is not in the prior art.

Conventional communication systems mostly comprise a backbone part and an access part. For example, a wireless communication network may comprise a Radio Access Network (RAN) part, which establishes and controls the wireless access, and a Core Network (CN), through which other networks and other users of the wireless communication network are connected. Another example of a packet data or a packet switched communication network is the communication network established between the servers and routers of the World Wide Web (WWW). With the steady increases of data demand, interfaces and networks are improved to handle the increased load. For wired connections in the network, optical data transmission using fibers is used to enhance the link capacity between such interfaces.

In communications systems, such as systems using optical data transmission, wireless, wireline or powerline communications, digital data values may be transmitted by means of an optical transmission signal. The optical transmission signal is generated by modulating the phase and/or the amplitude of an optical carrier signal, which possesses a carrier frequency, in dependence on the transmitted data values and in accordance with a constellation diagram of a respective Phase-Shift Keying (PSK) modulation or Quadrature Amplitude Modulation (QAM) method. Prominent examples are Binary Phase Shift Keying (BPSK), Quaternary Phase Shift Keying (QPSK), 16 QAM, 64 QAM, etc.

Today the maximum bit-rate, which may be transported over an optical fiber of a given length, may appear limited by the nonlinearity of the fiber. An increase of the optical power, which should allow transporting more information bits in a given spectral range, introduces nonlinear distortion. In principle, this input signal power limit may be overcome by so-called Digital Back Propagation (DBP) in the receiver Digital Signal Processing (DSP). However, DBP may be extremely processing resource consuming and may thus far be beyond application for high bit-rate optical transport systems.

A concept for transmission over nonlinear optical fiber is proposed in Mansoor I. Yousefi and Frank R. Kschischang, "Information Transmission using the Nonlinear Fourier Transform, Part I and Part II and Part III:. CoRR ArchiveX: abs/1204.0830 (2012), abs/1202.3653 (2012) and abs/1302.2875 (2013)".

Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide an apparatus, a method and a computer program for an optical transceiver. Embodiments may allow a more efficient optical transmission concept using an improved receiver processing. This may be achieved by detecting received data based on a set of two or more transmit symbols from a known symbol alphabet and based on a non-linearly transformed frequency domain representation of an optical receive signal. Embodiments may allow improved data detection for an optical signal having been received through a nonlinear optical transmission channel.

Embodiments provide an apparatus for a receiver. The apparatus comprises a receiver module, which is operable to receive an optical signal and to provide an electrical time domain signal based on the optical signal. The apparatus further comprises a processing module, which is operable to non-linearly transform the electrical time domain signal into an electrical frequency domain signal. The processing module is further operable to detect received data based on the electrical frequency domain signal and based on a set of two or more transmit symbols from a known symbol alphabet transmitted by the transmitter.

The set of two or more symbols may allow advanced receiver processing. For example, maximum likelihood detection may be carried out in the frequency domain.

In some embodiments the processing module may be operable to compare a spectral amplitude of the electrical frequency domain signal to a frequency domain representation of the set of two or more transmit symbols to detect the received data. The spectral amplitude may comprise information related to discrete and continuous spectral amplitudes and/or discrete frequency positions of the electrical time domain signal, and the frequency domain representation of the set of two or more transmit symbols may comprise information related to discrete and continuous spectral amplitudes and/or discrete frequency positions of the set of two or more transmit symbols. Hence, frequency domain representations may comprise information on soliton frequency components (discrete) and information on non-soliton frequency components (continuous spectrum between discrete soliton components). Based on these components a comparison may be carried out in the (nonlinear) frequency domain. Frequency domain detection may provide improvement for data detection as channel nonlinearity may be considered in the nonlinear transformation from the time domain to the frequency domain, such that detection may be less complex in the nonlinear frequency domain.

The processing module may be operable to detect the received data by carrying out a correlation between at least a part of the electrical frequency domain signal and a set of two or more different frequency domain representations, which are based on different combinations of transmit symbols in the set of two or more transmit symbols from the known symbol alphabet. Some embodiments may enable maximum likelihood detection in the (nonlinear) frequency domain.

In further embodiments, the processing module may be operable to estimate an optical channel between a transmitter of the optical signal and the receiver based on the electrical frequency domain signal. Embodiments may enable channel estimation and data detection in the (nonlinear) frequency domain. In some embodiments channel estimation may be based on one or more reference transmit symbols transmitted by the transmitter. The processing module may be operable to determine the estimated optical channel based on a spectral representation of the one or more reference transmit symbols and based on a portion of the electrical frequency domain signal, which comprises information related to the one or more reference transmit symbols transmitted by the transmitter. The spectral representation of the one or more reference transmit symbols may be based on a nonlinear transform of a time domain signal representing the one or more reference transmit symbols to the frequency domain. In some embodiments the processing module may be operable to determine one or more transformation parameters for the nonlinear transformation of the electrical time domain signal based on the estimated optical channel. For example, the nonlinear transform corresponds to a nonlinear Fourier transform. Embodiments may enable estimation of a nonlinear channel in the frequency domain and nonlinearity parameters may then be considered in the transformation of the electrical time domain signal, such that nonlinearities have already been considered the (nonlinear) electrical frequency domain signal. In some embodiments, at least one of the transformation parameters corresponds to a parameter representing information related to a nonlinearity of the optical channel or a transmission power of a transmit signal.

Embodiments further provide a method for a receiver. The method comprises receiving an optical signal and providing an electrical time domain signal based on the optical signal. The method further comprises nonlinearly transforming the electrical time domain signal into an electrical frequency domain signal. The method further comprises detecting received data based on the electrical frequency domain signal and based on a set of two or more transmit symbols from a known symbol alphabet transmitted by the transmitter.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which

Fig. 1 illustrates a block diagram of an embodiment of an apparatus for a receiver;

Fig. 2 shows an example of an electrical time domain signal based on a set of two or more transmit symbols;

Fig. 3 shows a spectrum of the time domain signal of Fig. 2;

Fig. 4 shows another embodiment of an apparatus 10 for a receiver 100;

Fig. 5 shows yet another embodiment of an apparatus 10 for a receiver 100;

Fig. 6 depicts an upper complex plane with an illustration of an NFT parameter;

Fig. 7 shows example waveforms of an embodiment utilizing channel estimation; and

Fig. 8 illustrates a block diagram of a flow chart of an embodiment of a method for a receiver.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

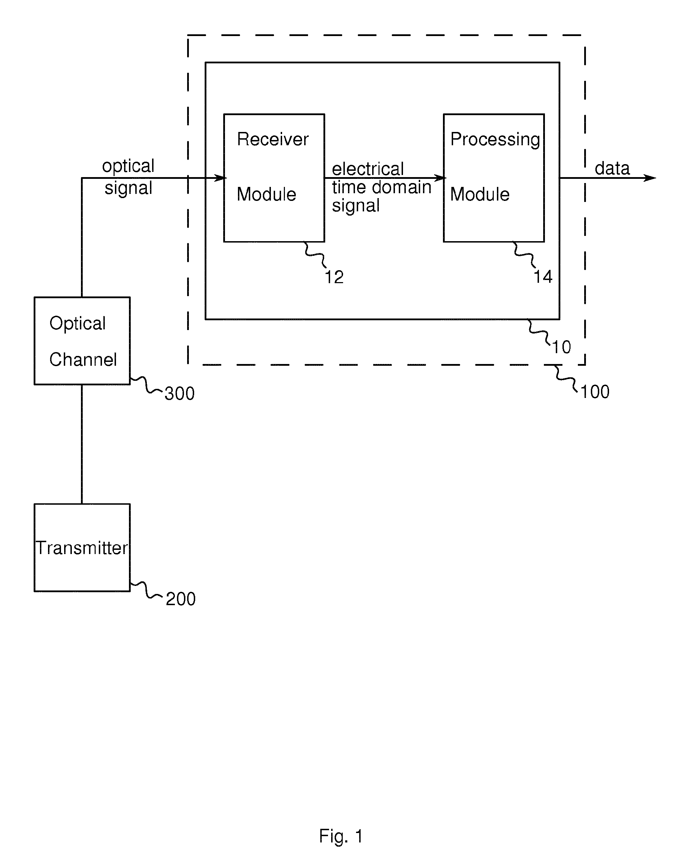

In the following some embodiments of apparatuses, methods and computer programs for an optical receiver will be described. Fig. 1 illustrates a block diagram of an embodiment of an apparatus 10 for a receiver 100. In other words, the apparatus 10 may be adapted to or operable in a receiver 100; it may be operated by or comprised in a receiver 100. Embodiments may also provide a receiver 100 comprising the apparatus 10. Fig. 1 further shows an embodiment (dashed lines) of a receiver 100 comprising the apparatus 10. The apparatus 10 comprises a receiver module 12, which is operable to receive an optical signal and to provide an electrical time domain signal based on the optical signal. The receiver module 12 may correspond to one or more receiver units or devices, any means for receiving, respectively. The receiver module 12 may comprise typical receiver components, such as one or more optical or photo sensors, one or more photo diodes or transistors, an optical/electrical converter, a filter or filter circuitry, an amplifier such as a Low Noise Amplifier (LNA), conversion circuitry for converting an optical signal to an electrical base band signal, an Analog/Digital (A/D) converter, or signal processing capability such as a Digital Signal Processor (DSP). Hence, the electrical time domain signal may correspond to A/D converted sampled of the down-converted optical signal. The receiver module 12 may be implemented as a coherent receiver and may also comprise processing means for phase estimation and correction to mitigate phase fluctuation and drift of a transmitter laser and/or a local oscillator laser. Moreover, the receiver module 12 may comprise DSP processing means or optical polarization controller means for alignment of signal State Of Polarization (signal SOP) to local oscillator SOP. A further component of the receiver module 12 may be a time estimation module, which aligns A/D sampling to a symbol clock of the transmitted signal.

The apparatus 10 further comprises a processing module 14, which is coupled to the receiver module 12. The processing module 14 is operable to non-linearly transform the electrical time domain signal into an electrical frequency domain signal. In some embodiments the processing module 14 may correspond to one or more processing units, devices, or any means for processing, such as programmable hardware components. The processing module 14 may be implemented at least partly in software, which is executable on accordingly adapted hardware, such as a processor, a Digital Signal Processor (DSP), a multi-purpose processor, or the like. The processing module 14 is further operable to detect received data based on the electrical frequency domain signal and based on a set of two or more transmit symbols from a known symbol alphabet, which are transmitted by the transmitter 200.

Fig. 1 further illustrates the transmitter 200 of the optical signal and the optical channel 300 between the transmitter 200 and the receiver 100. In some embodiments the processing module 14 is operable to use a Nonlinear Fourier Transformation (NFT) to transform the electrical time domain signal into the electrical frequency domain signal.

In embodiments the receiver apparatus 100 may exploit NFT. In some conventional concepts a transmission may exploit the NFT. The NFT defines a mathematical operation which converts the optical/electrical signal versus time E(t) into a so-called nonlinear spectrum. This nonlinear spectrum of a signal may have the unique property that transmission at high power with high nonlinearity can be described by a simple mathematical operation applied at the spectral amplitudes. More details on the NFT can, for example, be found in the above referenced Yousefi et al. The authors propose signal transmission scheme, which may be seen similar to Orthogonal Frequency Domain Multiplexing (OFDM) for the conventional linear spectrum. Nonlinear frequencies may be modulated by On/Off Keying (OOK) or Amplitude Shift Keying (ASK).

Embodiments make use of such a nonlinear transformation at the receiver apparatus 10. Different nonlinear spectral components may exhibit strongly different spectral width. Embodiments may enable an efficient transmission concept as a preselection of a set of transmitted signals may not be necessary at the transmitter. In other words, a determination of which nonlinear frequencies can be occupied with what signal amplitudes on the transmitter side in order to keep a high spectral efficiency may be avoided. Some conventional schemes may be based on non-overlapping symbol pulses, e.g. solitons of different orders, which might limit the scheme when going to higher symbol rates, at which temporal pulse broadening may occur due to chromatic dispersion. Moreover, transmitter based NFT may be defined based on a lossless fiber. Experiments and simulation indicate that such an assumption may hold to a certain extent also for transmission over realistic fiber. Nevertheless, in order to keep efficiency, it may be advisable to incorporate means to adjust to realistic fiber condition and to apply some additional pre-processing of the received signal prior to NFT operation in the receiver apparatus 10.

In embodiments, at the transmitter "conventional" amplitude and/or phase modulated low bandwidth signal sequence may be generated, modulated on the optical carrier and transmitted of the fiber with nonlinearity. Pre-selection and pre-calculation of suitable signals may be performed.

In embodiments the receiver module 12 may be operable to convert a coherently received optical envelope signal to obtain the electrical time domain signal. In other words, the receiver module 12 may provide a substantially coherently detected electrical time domain signal based on the optical signal. After coherent detection the processing module 14, e.g. a receiver's 100 DSP, a maximum likelihood (sequence) detection may be performed not on the received electrical time domain signal E(t), but at the nonlinear spectral amplitude $q(\lambda)$ of the transformed signal, i.e. the electrical frequency domain signal. That is to say that the processing module 14 may be operable to compare a spectral amplitude of the electrical frequency domain signal $q(\lambda)$ to a frequency domain representation of the set of two or more transmit symbols to detect the received data. E(t) may correspond to a block of a few symbols, i.e. to the set of two or more transmit symbols, rather than to an isolated single symbol.

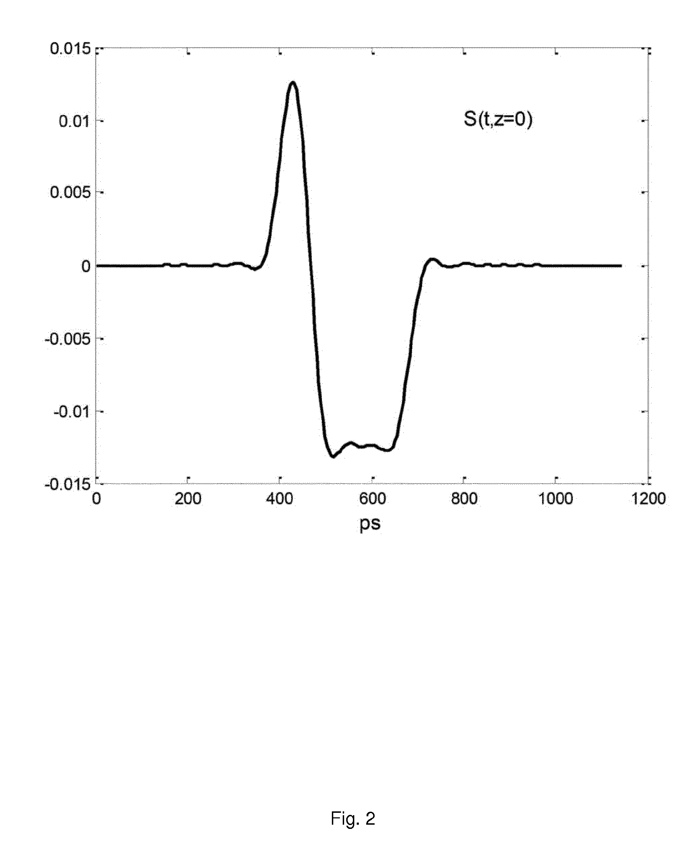

Fig. 2 shows an example of an electrical time domain transmit signal based on a set of two or more transmit symbols. Fig. 2 shows a view chart of a time domain base band signal level versus time in pico seconds (ps). Fig. 2 illustrates a 4 symbol (14Gbd) Binary Phase Shift Keying (BPSK) envelope with +/-1 amplitude levels (approximately 0.013 absolute amplitudes, for example in Volts). Embodiments may reduce a waste of bandwidth by considering a symbol block, a set of two or more consecutive transmit symbols, rather than for an isolated symbol pulse. Fig. 2 shows E(t)=S(t,z=0) for a 14GBd BPSK signal carrying binary information +1, -1, -1, -1. The term z=0 indicates that the signal over time t is given at the very beginning of the fiber, where it is assumed that the z determines the longitudinal coordinate of the fiber determining the fiber start at the transmitter 200 at z=0 and the fiber end at the receiver 100 at z=L, where L determines the overall length of the fiber.

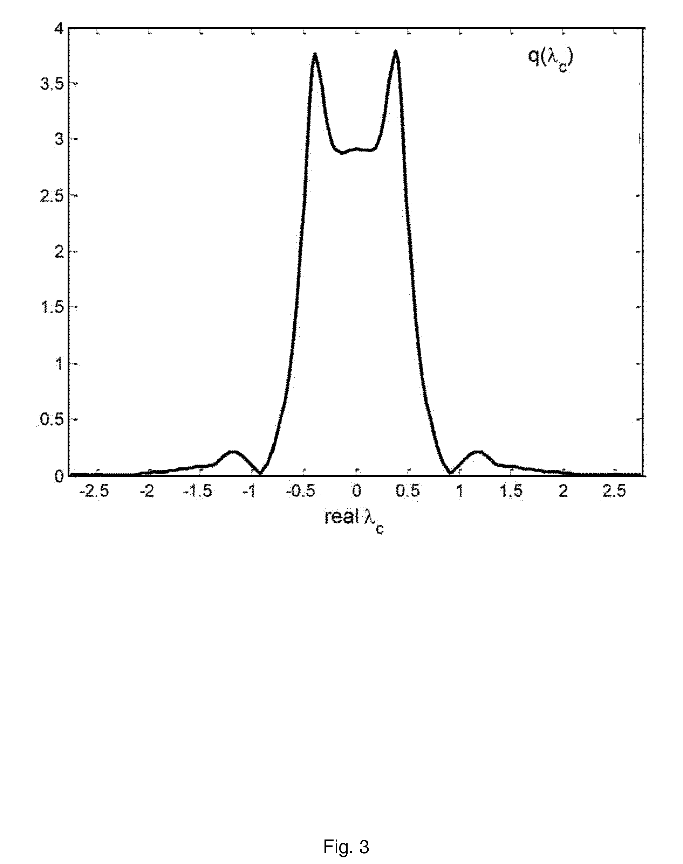

Fig. 3 shows a part of a nonlinear spectrum of the time domain signal of Fig. 2, which, in this embodiment, was obtained using NFT. Fig. 3 shows a view chart illustrating the amplitude $q(\lambda_c)$ over the real value "real $\lambda_c$" of the complex wavelength $\lambda_c$. Furthermore it is assumed that a transmit power of the signal shown in Fig. 2 is 5dBm. Fig. 3 illustrates the NFT spectrum of the signal displayed in Fig. 2. It can be seen that the magnitude of the spectrum is symmetrical to "real $\lambda_c$=0". Especially at fiber output the group velocity dispersion quantified by $\beta_{2,NL}$ may introduce a strong spectral phase variation.

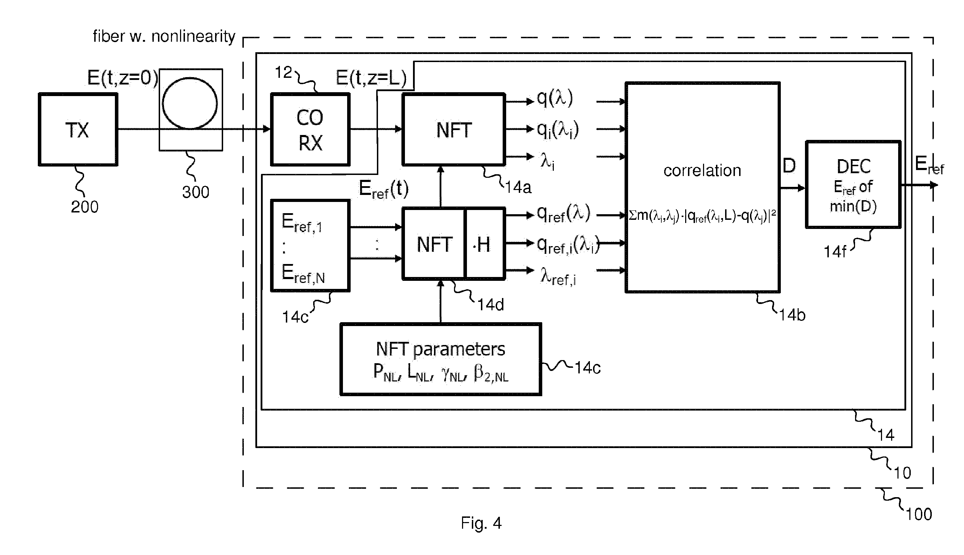

Fig. 4 shows another embodiment of an apparatus 10 for a receiver 100. Fig. 4 shows the transmitter 200 transmitting an optical signal E(t, z=0) through an optical channel 300 (fiber) to the receiver apparatus 10. The receiver module 12 is implemented as a coherent optical receiver and receives the optical signal E(t, z=L), where L corresponds to the overall fiber length and coherently down-converts the optical receive signal to an electrical time domain signal, which is then A/D-converted to digital samples subsequently.

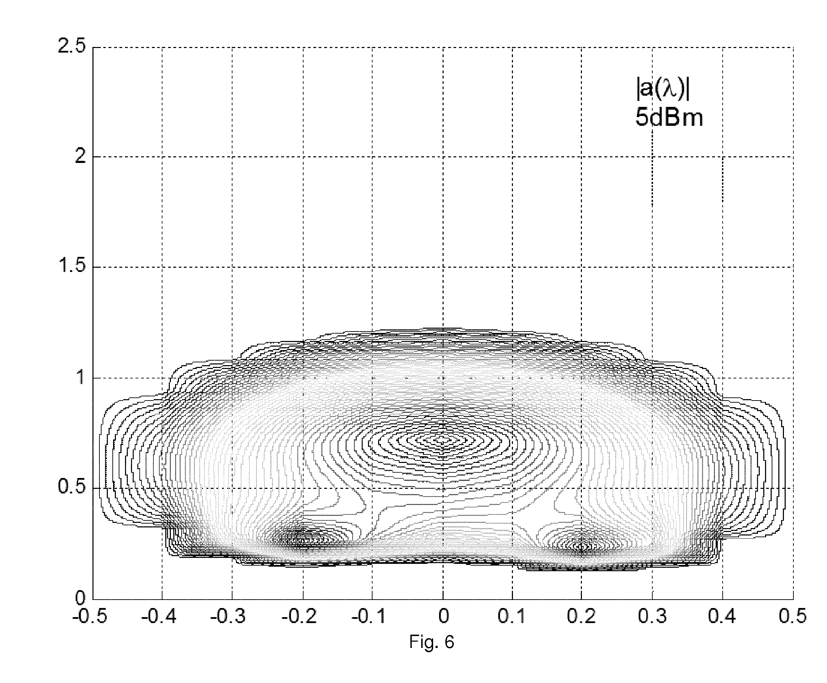

The processing module 14 comprises multiple components, which will be detailed in the following. The electrical time domain signal from the receiver module 12 is provided to an NFT module 14a, which converts the electrical time domain signal to an electrical frequency domain signal. The electrical signals are assumed to be represented by digital samples. The processing module 14 is operable to compare spectral parameters, e.g. a spectral amplitude, of the electrical frequency domain signal to spectral parameters, e.g. a frequency domain representation, of the set of two or more transmit symbols to detect the received data using a correlation module 14b. The spectral parameters may comprise information related to discrete $q_i(\lambda_i)$ and continuous $q(\lambda)$ spectral amplitudes of the electrical time domain signal as well as the discrete frequency or wavelengths positions $\lambda_i$, and/or a spectral function $a(\lambda t)$ or the magnitude of it, where $\lambda t$ is a grid on the complex plane (upper half) and where zeros of $|a(\lambda t)|$ correspond to discrete frequency values $\lambda_i$, which will be detailed subsequently with the help of Fig. 6.

The processing module 14 further comprises a memory 14c for storing N reference signals $E_{ref,1}...E_{ref,N}$ representing different time domain signals based on possible combinations of transmit symbols in the set of transmit symbols from the known transmit symbol alphabet. For example, a set of four transmit symbols is considered and one of the reference signals $E_{ref,i}$ may correspond to samples of the signal depicted in Fig. 2. The reference signals $E_{ref,1}...E_{ref,N}$ are then transformed by another NFT module 14d to obtain a nonlinear frequency domain representation of the set of two or more transmit symbols. In the present embodiment the sets of transmit symbols are transformed. In other embodiments the transformations of the sets may be predetermined and stored in a memory. The frequency domain representation of the set of two or more transmit symbols comprises information related to discrete $q_{ref,i}(\lambda_{ref,i})$ and continuous $q_{ref}(\lambda)$ spectral amplitudes and discrete frequency positions $\lambda_{ref,i}$ of the set of two or more transmit symbols. As shown in Fig. 4 the processing module 14 further comprises a memory 14e, which stores NFT parameters, for example, $P_{NL}$ as signal transmit power, $L_{NL}$ as fiber length, $\gamma_{NL}$ as nonlinear coefficient, $\beta_{2,NL}$ as chromatic dispersion. In the present embodiments these parameters are predetermined and stored in the memory module 14e; in other embodiments these parameters may be adapted, for example, based on channel estimation as will be detailed subsequently.

In the embodiment depicted in Fig. 4 the processing module 14 is operable to correlate at least parts of a nonlinear Fourier transformation of the electrical time domain signal with nonlinear Fourier transformations of time domain signals composed of the set of two or more transmit symbols from the known symbol alphabet. The correlation is carried out in the correlation module 14b, which determines a correlation result or cost function D. The correlation result or cost function D may correspond to any measure indicating a difference between at least parts of a nonlinear Fourier transformation of the electrical time domain signal and nonlinear Fourier transformations of time domain signals composed of the set of two or more transmit symbols from the known symbol alphabet.

For example, a measure or cost function for differences or correlations of discrete $q_i(\lambda_i)$ and continuous $q(\lambda)$ spectral amplitudes of the electrical time domain signal as well as the discrete frequency or wavelengths positions $\lambda_i$ and discrete $q_{ref,i}(\lambda_{ref,i})$ and continuous $q_{ref}(\lambda)$ spectral amplitudes and discrete frequency positions $\lambda_{ref,i}$ of the set of two or more transmit symbols may be determined by the correlation module 14b. That is to say that the parameters on which a comparison is based in embodiments may differ. Some embodiments may compare discrete spectral amplitudes $q_i(\lambda_i)$, $q_{ref,i}(\lambda_{ref,i})$, other embodiments may compare continuous amplitudes $q(\lambda)$, $q_{ref}(\lambda_{ref})$, and other embodiments may compare discrete frequency positions $\lambda_i$, $\lambda_{ref,i}$. Other embodiments may use any combination thereof. For example, in some embodiments discrete eigenvalues of the transformations may be used or their position in a complex plane, the upper complex plane respectively.

The processing module 14 is operable to detect the received data by carrying out a correlation (module 14b) between at least a part of the electrical frequency domain signal and a set of two or more different frequency domain representations, which are based on different combinations of transmit symbols in the set of two or more transmit symbols from the known symbol alphabet. The processing module 14 further comprises a detector, decider or decoder module 14f, which then detects the data in terms of a reference signal or symbol sequence $E_{ref}$, which fulfills a predetermined criterion. Such a criterion may correspond to a minimum or maximum correlation result, e.g. in terms of a minimum difference or a minimum distance. That is to say that a correlation in embodiments may be implemented as the determination of a measure that allows to identify a difference or discrepancy between the part of the electrical frequency domain signal and a set of two or more different frequency domain representations. Examples for such measures are mean-square-error, Eucledian distance, accumulated absolute difference, etc.

As shown by Fig. 4, in the depicted embodiment $q(\lambda)$ of the received signal is correlated (compared) with the NFT transform of all possible sets of transmitted signals $q_{ref}(\lambda)$. The reference spectrum with the maximum correlation is the decision (maximum likelihood spectrum). The original symbol sequence determines the decided bits. The sets $q_{ref}(\lambda)$ are generated in an efficient way by calculating the NFT $q_{ref}(\lambda, z=0)$ for all possible time domain transmitter signals $E(t)$ for all possible bit combinations. The NFT fiber output spectrum $q_{ref}(\lambda, z=0)$ can then be determined by applying the simple NFT transfer function $H(\lambda)=\exp(4j \cdot \lambda^2 \cdot z)$ to each spectral amplitude, which is indicated in the NFT module 14d in Fig. 4, leading to

$$q_{ref}(\lambda, z=L)= H(\lambda) \, q_{ref}(\lambda, z=0).$$

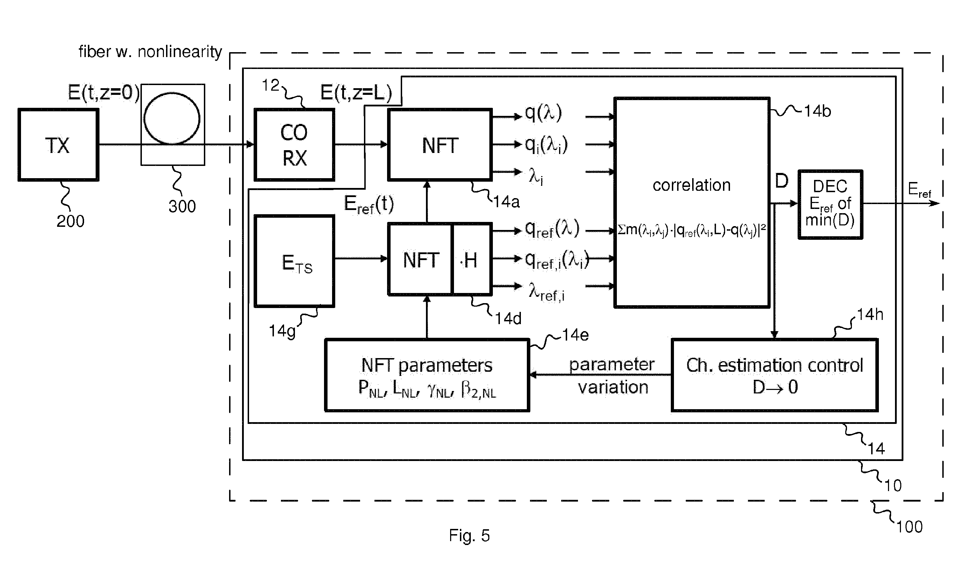

It is to be noted that in the embodiments described and depicted in Figs. 4 and 5 the NFT transfer function is shown at the NFT module 14d, it may, in other embodiments, as well be applied at NFT module 14a to account for the channel influence. In other words, $q(\lambda, z=0)$ may be determined by $q(\lambda, z=L)/H(\lambda)$ and parameters for z=0 may be compared or correlated. The search for the reference spectrum (and with that the reference time domain signal), which is most likely to the received spectrum q(λ) can be done by looking for the minimum Euclidian distance

$$D= \Sigma \ |q_{ref}(\lambda, \ L)- q(\lambda)|^2$$

between received and transmitted nonlinear spectral amplitudes. The cost function used for decision can be the simple Euclidian distance D, but may also correspond to a more sophisticated cost function, such as

$$D= \Sigma \ m(\lambda_i, \ \lambda_j) \cdot |q_{ref}(\lambda_i, \ L)- q(\lambda_j)|^2$$

using a metric $m(\lambda_i, \ \lambda_j)$, which is different from $m= \delta(\lambda_i, \ \lambda_j)$.

Fig. 5 illustrates another embodiment of a receiver apparatus 10. In the embodiment of Fig. 5 the processing module 14 comprises similar components as in the embodiment described above for Fig. 4. Components with similar reference signs carry out similar functions. In the embodiment of Fig. 5 the processing module 14 is operable to estimate an optical channel between the transmitter 200 of the optical signal and the receiver apparatus 10 based on the electrical frequency domain signal. The embodiment of Fig. 5 therefore comprises a memory module 14g for storing training sequences $E_{TS}$ and a channel estimation module 14h for estimating the optical channel. The processing module 14 is operable to determine the estimated optical channel by means of the channel estimation module 14h based on one or more reference transmit symbols or training transmit symbols $E_{TS}$ transmitted by the transmitter 200, which are locally stored in module 14g.

On basis of known transmitted training sequences $E_{TS}$ (data aided), which are known at the receiver 100, or in other embodiments based on decided sequences (decision directed), channel model parameters of the NFT, i.e. signal power $P_{NL}$, fiber length $L_{NL}$, chromatic dispersion coefficient $\beta_{2,NL}$, and nonlinear coefficient $\gamma_{NL}$ may be tuned to a minimum cost function D as illustrated in Fig. 5 in terms of parameter variation. The processing module 14 is operable to determine the estimated optical channel based on a spectral representation of the one or more reference transmit symbols and based on a portion of the electrical frequency domain signal, which comprises information related to the one or more reference transmit symbols transmitted by the transmitter 200. It is assumed that the transmitter 200 transmits the reference or training transmit symbols on known transmission resources, e.g. known time and frequency/wavelength resources. In the present embodiment of Fig. 5 the spectral representation of the one or more reference transmit symbols is based on a nonlinear transform, e.g. NFT 14d, of a time domain signal representing the one or more reference transmit symbols to the (nonlinear) frequency domain. Moreover, the processing module 14 is operable to determine one or more transformation parameters for the nonlinear transformation of the electrical time domain signal based on the estimated optical channel. In the present embodiment at least one of the transformation parameters corresponds to a parameter $\gamma_{NL}$ representing information related to a nonlinearity of the optical channel or a transmission power of a transmit signal.

Further details on the NFT used in embodiments (NFT blocks 14a, 14d of Figs. 4 and 5) can be found in the above referenced Yousefi et al. There are different ways to perform NFT on a time domain signal. One way in some embodiments is to apply the layer peeling method. The processing effort of this method grows linearly with the number of time samples N. Let q(k) be time samples of the optical signal E(t), where k represent a discrete time index. Two nonlinear Fourier coefficients a(λ) and b(λ) can be calculated.

For NFT, in a first step the time domain signal E(t) appears in units sqrt(Watt) meaning that $|E(t)|^2$ is the instantaneous signal power. In the following equations $\tau$ denotes the physical time whereas $t= \tau/T$ is a normalized time. The complex envelope E(t) (in sqrt(Watt)) is further normalized by $\sqrt{P_0}$ yielding the time-domain signal

$$q(t)=E(\tau \cdot T)/ \sqrt{P_0} \ .$$

Time samples of q(t) are q(k).

Let $q = \dfrac{E(\tau)}{\sqrt{P_0}}$, $z = \dfrac{l}{L}$, $t = \dfrac{\tau}{T_0}$, where 1 corresponds to the longitudinal coordinate along the fiber, z corresponds to the normalized longitudinal coordinate along the fiber of length L.

With $T_0 = \sqrt{\dfrac{|\beta_2|L}{2}}$ and $P = \dfrac{2}{\gamma L}$ the normal can be obtained

$$(a[k+1], b[k+1]) = (a[k], b[k]) \circ (x[k], y[k])$$

$$(a[0], b[0]) = (1, 0)$$

where a definition of the operation and further details can be found in the above referenced Yousefi et al.

$$\begin{aligned} a[k+1] &= a[k]x[k] - b[k]\overline{y}[k], \\ b[k+1] &= a[k]y[k] - b[k]\overline{x}[k], \end{aligned} \tag{1}$$

in which

$$x[k] = \left( \cos(D\varepsilon) - j\frac{\lambda}{D}\sin(D\varepsilon) \right) e^{j\lambda(t[k]-t[k-1])},$$

$$y[k] = \frac{-q_k^*}{D}\sin(D\varepsilon) e^{-j\lambda(t[k]+t[k-1])},$$

and $\overline{x}[k](\lambda) = x^*[k](\lambda^*)$, $\overline{y}[k](\lambda) = y^*[k](\lambda^*)$, $D = \sqrt{\lambda^2 + |q[k]|^2}$ . The desired coefficients can be obtained as $a := a[N]$ and $b := b[N]$.

This layer peeling procedure (eqn.(1)) may be performed for each nonlinear frequency sample $\lambda$. The nonlinear spectral amplitude becomes q($\lambda$)=b($\lambda$)/a($\lambda$). The full information on the signal is included in the continuous amplitude spectrum q($\lambda$) for real valued frequencies $\lambda$ and in discrete complex (upper complex plane) nonlinear frequency points $\lambda_i$. At these discrete points (solitons) the amplitude can be defined as $q_i(\lambda_i)$=b($\lambda_i$)/(da($\lambda$)/d$\lambda$)$|_{\lambda=\lambda_i}$. For small signal power the continuous spectrum q($\lambda$) converges to the conventional spectral amplitudes q($\lambda$)→E($\omega$=2$\lambda$.).

To be more specific, the cost function D= $\Sigma$ m($\lambda_i$, $\lambda_j$) · |q$_{ref}$($\lambda_i$, L)- q($\lambda_j$)|$^2$ explained above - which may be used for channel estimation at the receiver 100 and data decision as well - may consist of two contributions. One of the continuous amplitude samples (at real valued $\lambda$) plus another of the discrete spectral points at complex $\lambda_i$ points. Fig. 6 depicts an upper complex plane with an illustration of the amplitude |a($\lambda$)|. Fig. 6 shows |a($\lambda$)| over the C$^+$-plane. In Fig. 6 the denser/darker the illustration the higher |a($\lambda$)|. A discrete 0-point is shown at $\lambda_i$=0.72j, which is a nonlinear frequency of a soliton (amplitude is not shown in Fig. 6 for brevity). As illustrated by Fig. 6, discrete $\lambda_i$ are located where |a($\lambda$)| becomes zero over the positive complex plane (|a($\lambda$=$\lambda_i$)|=0).

Fig. 6 illustrates lines of constant |a($\lambda$t)|, where a zero can be found at $\lambda$t=$\lambda_i$ =0.72j. This $\lambda$t= $\lambda_i$ is a discrete frequency value, whereas at $\lambda$t= ±0.2+0.25j minima are visible which, however, do not correspond to zeros of |a($\lambda$t)|. Nevertheless, this modulated surface of |a($\lambda$t)| can be used for the above correlation, too. In other words a or |a| may be used as cost function D; it may correspond to an output of the NFT modules 14a, 14d introduced in Figs. 4 and 5. The spectral parameter a or |a| may comprise more information than a discrete zero in $\lambda_i$, because minima may be identified at low transmission powers already, where they might not correspond to actual zeros (solitons), yet.

Strategies to find discrete $\lambda_i$ are explained in the above cited references. The weighting function m can be adjusted such that their contribution to D resembles the signal energy they have. The energies E are

$$\hat{E} = \frac{1}{\pi} \int\limits_{-\infty}^{\infty} \log(1 + |\hat{q}(\lambda)|^2) d\lambda$$

for the continuous spectral amplitude q($\lambda$) and $\hat{E} = 4 \sum\limits_{j=1}^{N} \Im(\lambda_j)$ for the discrete frequency points (solitons).

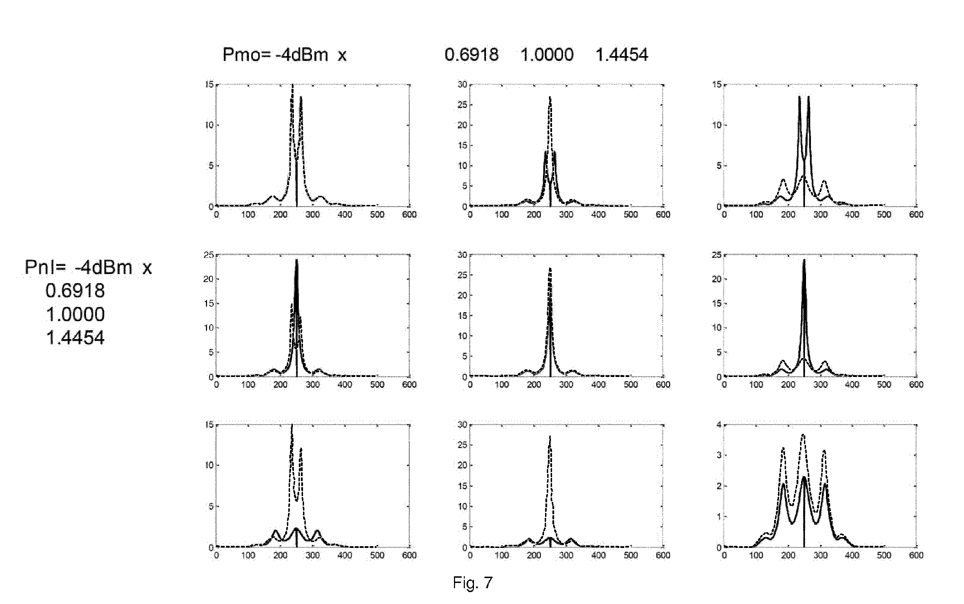

A simple example of an embodiment carrying out channel estimation is further illustrated in Fig. 7. Fig. 7 shows example waveforms of an embodiment utilizing channel estimation. Fig. 7 shows nine pairs of nonlinear spectral amplitudes (magnitudes). In each subplot a dashed line viewgraph is shown calculated from a received signal and solid line viewgraph calculated from the training sequences. For the different horizontal pictures the assumed received signal power Pmo was varied (-4dBm x{0.6918, 1, 1.4454}), for different vertical pictures the signal power Pnl of the NFT was varied (-4dBm x{0.6918, 1, 1.4454}). It is obvious that for a received signal power equal to NFT model power both spectra are in agreement, meaning that the contribution of q$_{ref}$($\lambda$,L)-q($\lambda$) in the cost function D vanishes.

In further embodiments the processing module 14 may be operable to detect receive data in an iteration based on sets of two or more transmit symbols from the known symbol alphabet. In other words, the sequence of symbols may be subdivided in sets of equal or different sizes. The processing module 14 may then perform an iteration in the above described manner through the sets and detect data on a set per set basis. Channel estimation may also be carried out for each or for a number of sets, for example, by means of a sliding channel estimation window.

The above described signal processing may be applied per polarization mode. In other words, some embodiments may use multiple polarization modes, for example, Polarization Multiplexed-QPSK (PM-QPSK) may be utilized. The above described NFT utilization may then be applied for each of multiple polarization modes, which ideally are orthogonal.

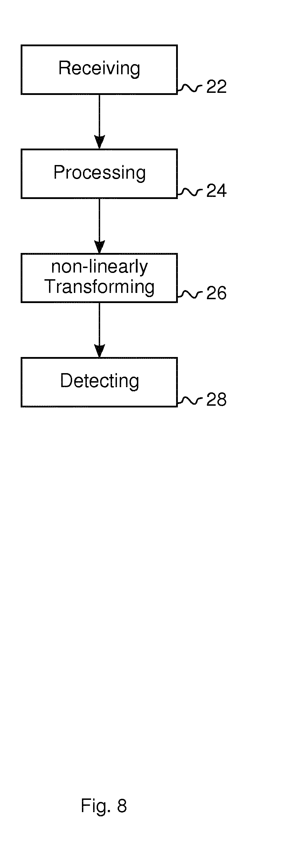

Fig. 8 illustrates a block diagram of a flow chart of an embodiment of a method for a receiver 100. The method comprises receiving 22 an optical signal and providing 24 an electrical time domain signal based on the optical signal. The method further comprises non-linearly transforming 26 the electrical time domain signal into an electrical frequency domain signal. The method further comprises detecting 28 received data based on the electrical frequency domain signal and based on a set of two or more transmit symbols from a known symbol alphabet transmitted by the transmitter 200.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for processing", etc., may be provided through the use of dedicated hardware, such as "a receiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for a receiver (100), the apparatus (10) comprising
   a receiver module (12) operable to receive an optical signal and to provide an electrical time domain signal based on the optical signal;
   a processing module (14) operable to non-linearly transform the electrical time domain signal into an electrical frequency domain signal, the processing module (14) being further operable to detect received data based on the electrical frequency domain signal and based on a set of two or more transmit symbols from a known symbol alphabet transmitted by the transmitter (200).

2. The apparatus (10) of claim 1, wherein the processing module (14) is operable to use a nonlinear Fourier transformation to transform the electrical time domain signal into the electrical frequency domain signal.

3. The apparatus (10) of claim 1, wherein the processing module (14) is operable to compare a spectral amplitude of the electrical frequency domain signal to a frequency domain representation of the set of two or more transmit symbols to detect the received data.

4. The apparatus of claim 3, wherein the spectral amplitude comprises information related to discrete and continuous spectral amplitudes and/or discrete frequency positions of the electrical time domain signal and/or wherein the frequency domain representation of the set of two or more transmit symbols comprises information related to discrete and continuous spectral amplitudes and/or discrete frequency positions of the set of two or more transmit symbols.

5. The apparatus (10) of claim 1, wherein the processing module (14) is operable to correlate at least parts of a nonlinear Fourier transformation of the electrical time domain signal with nonlinear Fourier transformations of time domain signals composed of the set of two or more transmit symbols from the known symbol alphabet.

6. The apparatus (10) of claim 1, wherein the processing module (14) is operable to detect the received data by carrying out a correlation between at least a part of the electrical frequency domain signal and a set of two or more different frequency domain representations, which are based on different combinations of transmit symbols in the set of two or more transmit symbols from the known symbol alphabet.

**7.** The apparatus (10) of claim 1, wherein the processing module (14) is operable to estimate an optical channel between a transmitter (200) of the optical signal and the receiver (100) based on the electrical frequency domain signal.

**8.** The apparatus (10) of claim 7, wherein the processing module (14) is operable to determine the estimated optical channel based on one or more reference transmit symbols transmitted by the transmitter (200).

**9.** The apparatus (10) of claim 8, wherein the processing module (14) is operable to determine the estimated optical channel based on a spectral representation of the one or more reference transmit symbols and based on a portion of the electrical frequency domain signal, which comprises information related to the one or more reference transmit symbols transmitted by the transmitter (200), wherein the spectral representation of the one or more reference transmit symbols is based on a nonlinear transform of a time domain signal representing the one or more reference transmit symbols to the frequency domain.

**10.** The apparatus (10) of claim 7, wherein the processing module (14) is operable to determine one or more transformation parameters for the nonlinear transformation of the electrical time domain signal based on the estimated optical channel, and/or wherein the nonlinear transform corresponds to a nonlinear Fourier transform.

**11.** The apparatus (10) of claim 10, wherein at least one of the transformation parameters corresponds to a parameter representing information related to a nonlinearity of the optical channel or a transmission power of a transmit signal.

**12.** The apparatus (10) of claim 1, wherein the receiver module (12) is operable to convert a coherently received optical envelope signal to obtain the electrical time domain signal.

**13.** The apparatus (10) of claim 1, wherein the processing module (14) is operable to detect receive data in an iteration based on sets of two or more transmit symbols from the known symbol alphabet.

**14.** A method for a receiver (100), the method comprising
receiving (22) an optical signal;
providing (24) an electrical time domain signal based on the optical signal; non-linearly transforming (26) the electrical time domain signal into an electrical frequency domain signal; and
detecting (28) received data based on the electrical frequency domain signal and based on a set of two or more transmit symbols from a known symbol alphabet transmitted by the transmitter (200).

**15.** A computer program having a program code for performing the method of claim 14, when the computer program is executed on a computer, a processor, or a programmable hardware component.

Fig. 1

EP 2 860 888 A1

Fig. 2

13

Fig. 3

Fig. 4

Fig. 5

Fig. 6

Fig. 7

Receiving ~22

Processing ~24

non-linearly Transforming ~26

Detecting ~28

Fig. 8

Europäisches
Patentamt

European
Patent Office

Office européen
des brevets

# EUROPEAN SEARCH REPORT

Application Number

EP 13 30 6406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Mansoor I Yousefi ET AL: "Information Transmission using the Nonlinear Fourier Transform, Part I: Mathematical Tools", IEEE TRANSACTIONS ON INFORMATION THEORY, 15 February 2013 (2013-02-15), XP055109070, Retrieved from the Internet: URL:http://arxiv.org/pdf/1202.3653v2.pdf [retrieved on 2014-03-20] * the whole document * | 1-15 | INV. H04B10/69 |
| A | YOUSEFI MANSOOR I ET AL: "Communication over fiber-optic channels using the nonlinear Fourier transform", 2013 IEEE INTERNATIONAL SYMPOSIUM ON INFORMATION THEORY, IEEE, 7 July 2013 (2013-07-07), pages 1710-1714, XP032497480, ISSN: 2157-8095, DOI: 10.1109/ISIT.2013.6620519 [retrieved on 2013-10-03] * the whole document * | 1-15 | |
| A | A. HASEGAWA ET AL: "Eigenvalue communication", JOURNAL OF LIGHTWAVE TECHNOLOGY, vol. 11, no. 3, 1 March 1993 (1993-03-01), pages 395-399, XP055109072, ISSN: 0733-8724, DOI: 10.1109/50.219570 * the whole document * -/-- | 1-15 | TECHNICAL FIELDS SEARCHED (IPC) H04B |

The present search report has been drawn up for all claims

| Place of search | Date of completion of the search | Examiner |
|---|---|---|
| Munich | 20 March 2014 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 13 30 6406

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAOLO GHELFI ET AL: "Impact of an Additional All-Optical Decision Element in Band-Limited Receivers for RZ Systems", JOURNAL OF LIGHTWAVE TECHNOLOGY, IEEE SERVICE CENTER, NEW YORK, NY, US, vol. 25, no. 7, 1 July 2007 (2007-07-01), pages 1728-1734, XP011186963, ISSN: 0733-8724, DOI: 10.1109/JLT.2007.897697 * figure 2(c) * * Part II. THEORETICAL APPROACH * ----- | 1-15 | |

TECHNICAL FIELDS
SEARCHED       (IPC)

The present search report has been drawn up for all claims

| Place of search | Date of completion of the search | Examiner |
|---|---|---|
| Munich | 20 March 2014 | Petitit, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MANSOOR I. YOUSEFI ; FRANK R. KSCHIS-CHANG.** *Information Transmission using the Nonlinear Fourier Transform, Part I and Part II and Part III:. CoRR ArchiveX: abs/1204.0830 (2012), abs/1202.3653 (2012) and abs/1302.2875 (2013,* 2012